# FASCICULE DE BREVET EUROPEEN

(11) **EP 3 557 037 B1**
(45) Date de publication et mention de la délivrance du brevet: **17.08.2022**
(21) Numéro de dépôt: 19170274.5
(22) Date de dépôt: 18.04.2019
(51) Int. Cl.: F02K 9/56, B64G 1/40, F02K 9/76

(54) **BAIE MULTI-MOTEURS À ARCHITECTURE DE CALCUL REDONDANTE**
MEHRMOTORIGES GESTELL MIT REDUNDANTER RECHNERARCHITEKTUR
MULTI-ENGINE RACK WITH REDUNDANT COMPUTING ARCHITECTURE

(30) Priorité: 19.04.2018 FR 1853454
(43) Date de publication de la demande: 23.10.2019
(73) Titulaire: ArianeGroup SAS, 78130 Les Mureaux (FR)
(72) Inventeur: LE GONIDEC, Serge, 27207 Vernon Cedex (FR); REMY, Antoine, 27207 Vernon Cedex (FR); COLAS, Stéphane, 27207 Vernon Cedex (FR); CAZIN, Benoit, 27207 Vernon Cedex (FR); VALOT, Xavier, 27207 Vernon Cedex (FR)
(74) Mandataire: Cabinet Beau de Loménie

(56) Documents cités:
- JP-A- S61 273 602
- US-A- 3 948 470
- US-A- 4 785 403
- US-A- 5 799 902
- US-A1- 2018 093 778

## Description

### DOMAINE TECHNOLOGIQUE

L'invention concerne les calculateurs de moteur utilisés dans des baies multi-moteurs, notamment les baies multi-moteurs pour lanceurs spatiaux.

### ARRIERE-PLAN TECHNOLOGIQUE

Dans un mode de réalisation connu en soi, une baie multimoteurs comporte une pluralité de moteurs, et chacun desdits moteurs comporte un calculateur de moteur associé au moteur et configuré pour acquérir des signaux de mesure provenant de capteurs du moteur et pour exécuter un ou plusieurs calculs de moteur relatifs au moteur considéré.

Dans ce contexte, un « calcul de moteur » désigne un calcul relatif au moteur ou à au moins un équipement de celui-ci. C'est donc un calcul visant à obtenir une information relative au moteur ou à l'un de ses équipements.

Le calcul de moteur peut être un calcul concernant le moteur dans son ensemble, ou un calcul concernant plus spécifiquement l'un des équipements du moteur.

Par exemple, le calcul de moteur peut être un calcul concernant l'une des vannes du moteur. Le calculateur de moteur peut alors par exemple être un contrôleur de vanne configuré pour contrôler la vanne considérée.

Le pilotage d'un moteur nécessite de réaliser un certain nombre de calculs de natures différentes. Les calculs de moteur peuvent notamment être des calculs :
- de commandes à appliquer aux actionneurs de puissance du moteur (hydrauliques, électriques, électro-pneumatiques,...), et notamment les consignes de position de vannes de puissance ; ou
- de variables d'état du moteur, servant notamment au suivi de santé du moteur ou au contrôle de celui-ci.

Ces calculs peuvent être réalisés soit à intervalles réguliers, de manière itérative, soit lorsqu'une condition d'exécution du calcul est satisfaite.

Par ailleurs, un calculateur de moteur associé à un moteur est un calculateur configuré pour être utilisé spécifiquement avec ce moteur. Il est dans ce but disposé au voisinage des principaux organes du moteur (pompes d'alimentation par exemple), et configuré pour acquérir directement des signaux de mesure provenant de capteurs du moteur auquel il est associé et pour exécuter un certain nombre de calculs de moteur concernant ce moteur.

Ce calculateur peut de plus être le seul calculateur conservant dans sa mémoire certaines informations relatives au moteur auquel il est associé, et/ou être le seul calculateur configuré pour réaliser au moins un calcul de moteur relatif au moteur auquel il est associé.

Ainsi lors d'essais au sol sur banc moteur, le ou les calculateurs de moteur associés au moteur peut (ou peuvent ensemble) contrôler le fonctionnement du moteur pendant les essais du moteur, indépendamment du reste de la baie multi-moteurs.

Un moteur peut comporter un ou plusieurs calculateurs de moteurs.

De manière connue en soi, pour assurer un haut niveau de fiabilité, les calculateurs de moteur sont dupliqués, c'est-à-dire qu'ils présentent une architecture interne matérielle et logicielle qui permet que le calculateur lui-même réalise le ou les calculs de moteur en parallèle via deux, ou trois voies redondantes. Une baie multi-moteurs comportant des calculateurs de moteurs à architecture interne dupliqués avec deux voies redondantes est divulguée par le document US2018/093778.

Le document US 4,785,403 présente également un système de contrôle pour un avion comportant plusieurs moteurs.

Au sein de chaque calculateur de moteur, la redondance vise à assurer que les calculs de moteur sont effectivement conduits à leur terme lors d'une mission et que la fonction de calcul des calculateurs est ainsi assurée, avec un haut niveau de fiabilité.

Cette architecture de calculateurs est efficace. En revanche, elle conduit à augmenter de manière très importante le coût des calculateurs, et cela d'autant plus que ces calculateurs sont « spatialisés », c'est-à-dire adaptés spécifiquement aux conditions de fonctionnement que l'on rencontre dans le domaine spatial : ces calculateurs sont prévus pour résister à des conditions de température et de pression extrêmes, ainsi qu'à des bombardements divers (bombardements par des ions, etc....).

Par conséquent, lorsqu'un lanceur spatial comporte un, voire plusieurs moteurs, notamment dans une baie multi-moteurs, le coût des calculateurs de moteurs devient très important.

Il existe donc un besoin d'une solution permettant d'assurer qu'un certain nombre de calculs nécessaires au fonctionnement de baies multimoteurs soient réalisés avec un haut niveau de fiabilité, mais à un prix modéré.

### RESUME DE L'INVENTION

L'objectif indiqué ci-dessus est atteint grâce à une baie multimoteurs telle que définie dans la première revendication, dans laquelle pour au moins un premier moteur, au moins un calculateur de moteur associé à un autre moteur que le premier moteur est configuré pour exécuter ledit calcul de moteur pour le premier moteur en parallèle avec le calculateur associé au premier moteur.

Ainsi, au moins pour le calcul de moteur considéré pour le premier moteur, ce calcul de moteur est réalisé non seulement par ledit calculateur de moteur associé au premier moteur, mais aussi par un ou plusieurs calculateurs de moteur associés à des moteurs autres que le premier moteur.

A chaque instant pendant le fonctionnement normal de la baie (c'est-à-dire, en l'absence de dysfonctionnement dans la baie), le calcul de moteur est donc réalisé de manière redondante en parallèle par au moins deux calculateurs de moteur, ce qui assure un haut degré de fiabilité.

Pour assurer une fiabilité encore plus grande, dans un mode de réalisation au moins deux calculateurs de moteur associés à deux autres moteurs que le premier moteur sont configurés pour exécuter ledit calcul de moteur pour le premier moteur en parallèle avec le calculateur associé au premier moteur.

Pour faciliter l'exploitation des résultats produits par les différents calculateurs de moteur, la baie peut comporter un dispositif de détermination configuré pour, lorsque le calcul de moteur a été exécuté en parallèle par une pluralité de calculateurs de moteur, déterminer une valeur unique à prendre en compte comme résultat de ce calcul.

Cette valeur unique est alors transmise à l'équipement ou aux équipements au(x)quel(s) cette valeur doit être transmise. Elle peut notamment être transmise à un ou plusieurs autres calculateurs de la baie, et/ou à un ou plusieurs calculateurs extérieurs à la baie.

Lors de la détermination de cette unique valeur à prendre en compte, dans un mode de réalisation le dispositif de détermination identifie le ou les calculateurs de moteur valides parmi ladite pluralité de calculateurs, et détermine ladite valeur unique sur la base des informations issues du ou des calculateur(s) identifié(s) comme valide(s). Inversement, les informations issues du ou des calculateurs déterminés comme défaillants (non-valides) ne sont pas prises en compte. Un calculateur est identifié comme valide lorsqu'aucun dysfonctionnement du calculateur n'a été détecté.

Chacun des calculateurs peut être impliqué dans une architecture de redondance pour contribuer à réaliser une fonction d'arbitrage et à sélectionner le ou les calculateurs valides.

Dans ce qui suit, on appelle calculateur de moteur 'opérant' un calculateur de moteur dont les résultats sont pris en compte pour la commande ou le monitoring de la baie ou du véhicule dont fait partie la baie.

Dans un mode de réalisation, pour chaque moteur, le calculateur du moteur est par défaut le calculateur 'opérant'. La baie est configurée de telle sorte que pour chaque moteur, par défaut chaque calculateur de moteur du moteur est un calculateur opérant. La baie est de plus configurée pour détecter une défaillance de calculateur de moteur. Lorsqu'une défaillance sur l'un ou l'autre des calculateurs de moteur est détectée, un calculateur de moteur associé à un autre moteur et effectuant en parallèle les calculs de moteur du calculateur défaillant devient le calculateur opérant en remplacement du calculateur de moteur défaillant.

De préférence dans ce mode de réalisation, chaque moteur est configuré pour communiquer à un calculateur central un vecteur d'état indiquant ou permettant de détecter si le ou les calculateurs de moteur du moteur fonctionnent convenablement ou au contraire subissent un dysfonctionnement ; et pour chacun des moteurs, le calculateur central sélectionne le ou les calculateurs opérants qui fournissent les résultats de calculs de moteur du moteur qui sont pris en considération, en utilisant une fonction de sélection prédéterminée.

Dans un mode de réalisation, pour assurer la plus grande redondance le ou les calculateurs de moteur associé(s) à d'autres moteurs que le premier moteur et qui sont configurés pour exécuter le calcul de moteur pour le premier moteur sont de plus configurés pour exécuter la totalité des calculs de moteurs réalisés par le calculateur de moteur considéré associé au premier moteur.

Dans la baie multi-moteurs, un certain nombre de calculateurs de moteur (au moins un, et le plus souvent, au moins un par moteur) sont ainsi dimensionnés de manière à pouvoir exécuter en parallèle des calculs de moteur non seulement pour le moteur auquel ils sont associés, mais également pour un ou plusieurs autres moteurs.

Cela nécessite naturellement pour chacun de ces calculateurs de prévoir des capacités (de mémoire vive, de mémoire morte, etc.) et des capacités de calcul bien supérieures à ce qui serait nécessaire si le calculateur de moteur n'effectuait des calculs que pour le moteur auquel il est associé. Néanmoins, grâce à la baisse de coût des mémoires et de la puissance de calcul, cette extension de capacité des calculateurs de moteur en pratique n'entraîne pas un surcoût excessif.

Pour assurer une redondance de calcul pour les calculs de moteur du premier moteur, il est suffisant qu'un autre calculateur que le calculateur de moteur du premier moteur réalise les calculs de moteur du premier moteur. Pendant, si l'on veut assurer un niveau de redondance encore plus élevé, on peut prévoir que les calculs de moteur du premier moteur soient réalisés par plus qu'un calculateur de moteur d'un moteur autre que le premier moteur. On peut par exemple prévoir que les calculs de moteur du premier moteur soient réalisés par deux autres calculateurs de moteur, voire davantage.

Par ailleurs, la duplication du calcul de moteur sur plusieurs calculateurs de moteur est naturellement prévue de préférence pour chacun des calculateurs de moteur (ainsi que pour l'ensemble des calculs de moteurs).

Ainsi dans un mode de réalisation, pour chacun des moteurs, au moins N calculateurs de moteur tels que chacun desdits N calculateurs de moteur est associé à un autre moteur que le moteur considéré sont configurés pour exécuter ledit calcul de moteur pour le moteur considéré.

Le degré N de duplication des calculs de moteurs peut être plus ou moins grand, en fonction notamment de l'importance des calculs de moteur considérés et de la fiabilité attendue.

Avantageusement, l'architecture de baie multi-moteurs proposée suivant la présente divulgation permet de manière générale d'assurer un niveau élevé de redondance.

Grâce à cela, pour les applications spatiales, on peut envisager d'utiliser non pas des calculateurs spatialisés, c'est-à-dire des calculateurs spécialement conçus pour une utilisation sur un engin spatial, mais des calculateurs industriels conçus pour une utilisation industrielle au sol, dont le coût est nettement moins élevé que celui des calculateurs spatialisés.

Par ailleurs, certaines baies multi-moteurs comportent des moteurs qui ne sont pas tous identiques les uns aux autres. Ces baies peuvent notamment comporter des moteurs agencés de manière à former des groupes de moteurs.

Lorsque les moteurs sont ainsi disposés de manière à former un groupe spécifique, la redondance peut être réalisée au sein de ce groupe.

Ainsi, dans un mode de réalisation la pluralité de moteurs comprend un groupe de P moteurs Mi, i variant de 1 à P, P étant inférieur au nombre total de moteurs ; et pour chaque moteur Mi du groupe de moteur, N ou au moins N calculateur(s) de moteur associé(s) à N autre(s) moteur(s) du groupe que le moteur Mi est ou sont configuré(s) pour exécuter ledit calcul de moteur pour le moteur Mi.

Ainsi, la redondance de calcul pour le calcul de moteur considéré du premier moteur est assurée au sein du groupe de moteurs. On peut notamment prévoir que pour les calculs de moteur des moteurs du groupe, seuls d'autres moteurs du groupe soient sollicités pour exécuter ces calculs de moteur.

Le plus souvent, les calculs sont réalisés en parallèle par plusieurs calculateurs et ces calculateurs sont choisis par une règle simple.

Par exemple dans un mode de réalisation, au sein du groupe, pour chaque moteur Mi, N calculateur(s) de moteur associé(s) à N moteur(s) Mj, j variant de 1 à N, du groupe autre(s) que le moteur Mi, est ou sont configuré(s) pour exécuter ledit calcul de moteur pour le moteur Mi ; et
les indices j sont déterminés en fonction de i de telle sorte que l'écart entre i et j (en valeur absolue) est inférieur à une valeur prédéterminée, ou est égal à une valeur prédéterminée.

(On comprend naturellement que dans la phrase ci-dessus, les écarts entre indices sont exprimés modulo P).

Dans ce mode de réalisation, lorsque l'écart d'indice (j-i) entre le(s) indice(s) j du ou des calculateurs de moteurs qui exécute(nt) le calcul de moteur et l'indice i est inférieur à une valeur-seuil prédéterminée, cela signifie que les calculs concernant le premier moteur sont réalisés non seulement sur le calculateur de moteur de celui-ci, mais aussi sur les N moteurs les plus proches d'un côté et/ou de l'autre du premier moteur.

Par contraste, lorsque l'écart d'indice (j-i) entre le(s) indice(s) j du ou des calculateurs de moteurs qui exécute(nt) le calcul de moteur et l'indice i est égal à une valeur-seuil prédéterminée, si cet écart est strictement supérieur à 1, cela signifie que les calculs concernant le premier moteur sont réalisés non seulement sur le calculateur de moteur de celui-ci, mais aussi sur les moteurs décalés de (i-j) positions par rapport au premier moteur. Ce choix conduit à faire exécuter les calculs de moteur relatifs au premier moteur par des calculateurs de moteur relativement éloignés du premier moteur, ce qui réduit le risque d'une défaillance simultanée des différents calculateurs de moteur impliqués dans le calcul de moteur du premier moteur.

Dans la baie multi-moteurs, les groupes de moteurs peuvent être agencés de différentes manières.

Dans un mode de réalisation, le groupe de moteurs est un groupe de moteurs extérieurs M1.... Mp disposés le long d'un pourtour extérieur de la baie.

Dans un mode de réalisation, le groupe de moteurs est un groupe de moteurs centraux entourés par des moteurs extérieurs disposés le long d'un pourtour extérieur de la baie.

La présente divulgation concerne de préférence des baies multimoteurs dont les moteurs sont des moteurs-fusée. Par moteur-fusée, on désigne un moteur prévu pour équiper un lanceur spatial ou autre, et dont la poussée résulte de l'éjection de gaz de combustion via un divergent.

Cependant, elle est applicable à d'autres types de baies multimoteurs, notamment des baies susceptibles d'équiper des véhicules tels que par exemple des véhicules spatiaux, des aéronefs (avions, hélicoptères, dont notamment des drones à hélices multiples), ou des navires (bâtiments de surface ou sous-marins).

La présente divulgation concerne notamment un lanceur spatial comprenant au moins une baie multi-moteurs telle que définie précédemment.

### BREVE DESCRIPTION DES DESSINS

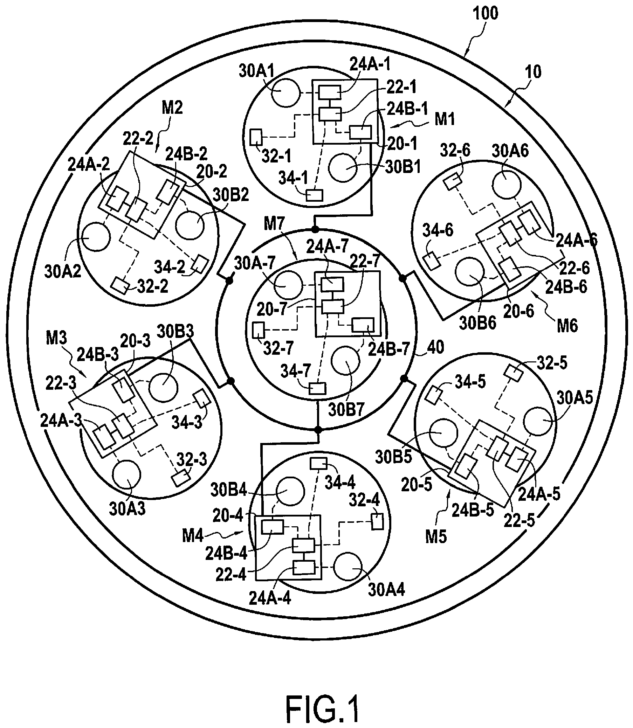

L'invention sera bien comprise et ses avantages apparaîtront mieux à la lecture de la description détaillée qui suit d'un mode de réalisation représenté à titre d'exemple non limitatifs. La description se réfère à la figure annexée, qui est une représentation schématique d'un lanceur spatial comportant une baie multi-moteurs conforme à la présente divulgation.

### DESCRIPTION DETAILLEE DE L'INVENTION

En faisant référence à cette figure, un lanceur spatial 100 comportant une baie multi-moteurs 10 conforme à la présente divulgation va maintenant être décrit dans plusieurs modes de réalisation.

Le lanceur spatial 100 forme une fusée à plusieurs étages. A l'exception notable des réservoirs d'ergols, le premier étage est constitué principalement par la baie multi-moteurs 10.

La baie 10 comporte sept moteurs : six moteurs extérieurs M1 à M6 répartis de manière axisymétrique sur la circonférence de la baie, et un moteur central M7.

Les moteurs M1 à M7 sont identiques les uns aux autres. Pour cette raison, les équipements de chacun des moteurs sont notés sous la forme XX-i (ou Xxi), où i représente l'indice du moteur : dans le cas présent, i varie de 1 à 7. Les équipements de moteurs peuvent aussi être désignés collectivement par la référence 'XX' ou encore par la référence 'XX-i', i désignant un indice de moteur quelconque.

Les moteurs Mi étant identiques les uns aux autres, la configuration des moteurs va maintenant être présentée pour un seul moteur, à savoir pour le moteur M1.

Le moteur M1 comporte différents équipements, parmi lesquels sont identifiés notamment des actionneurs de vanne, référencés collectivement 30A1, et des équipements de sécurité, référencés collectivement 30B1.

Le moteur M1 comporte également différents capteurs ; sur la figure unique, seuls deux capteurs 32-1 et 34-1 sont représentés.

Le moteur M1 comporte un boîtier à calculateurs 20-1, qui est un boîtier (ou une armoire) électronique configuré pour abriter et protéger les calculateurs de moteur du moteur M1.

Dans le cas présent, ce boîtier 20-1 comporte notamment trois calculateurs de moteur :
- un calculateur de moteur principal 22-1, configuré pour réaliser les principaux calculs de moteur relatif au moteur M1 ;
- un calculateur de moteur secondaire 24A-1, configuré pour réaliser les calculs de moteur relatifs aux actionneurs de vanne 30A1, pour assurer le contrôle de ces actionneurs ; et
- un calculateur de moteur secondaire 24B-1, configuré pour réaliser les calculs de moteur relatifs aux équipements de sécurité 30B1, afin de réaliser des fonctions de sécurité ou d'autres fonctions servant au monitoring de la baie 10.

Le calculateur de moteur principal 22-1 est connecté aux calculateurs de moteur secondaires et peut recevoir des informations de ceux-ci.

Le boîtier 20-1 peut comporter également d'autres calculateurs de moteur de moindre importance et non représentés.

En général, et dans le cas présent en particulier, chacun des calculateurs de moteur présente l'architecture matérielle d'un ordinateur ou plus largement d'un calculateur capable de réaliser des traitements de données. Ainsi chaque calculateur de moteur comprend notamment un processeur, une mémoire vive, une mémoire morte (non volatile), ainsi que des moyens de communication avec d'autres composants de la baie-moteur 10 ou même du lanceur 100.

Un calculateur de moteur est de préférence implanté à proximité des organes principaux du moteur (pompes d'ergols, actionneurs de vannes, chambre de combustion), mais peut néanmoins éventuellement être déporté.

Chaque calculateur de moteur 22-1, 24A-1, 24B-1 est relié par un bus de données 40 à d'autres composants de la baie-moteur, notamment à d'autres calculateurs de moteur comme cela sera expliqué par la suite.

Le calculateur de moteur principal 22-1 est relié aux capteurs 32-1 et 34-1, etc., et acquiert les signaux de mesures émis par ceux-ci afin de réaliser les principaux calculs de moteur concernant le premier moteur.

Dans un premier mode de réalisation, la règle de redondance choisie pour les moteurs Mi est de dupliquer les calculs de moteur pour un moteur Mi sur les moteurs Mj adjacents, c'est-à-dire ceux pour lesquels l'écart entre les positions i et j est égal à 1 (en valeur absolue).

Dans ce cas, pour un moteur donné, les calculs de moteur sont réalisés non seulement par le calculateur de moteur du moteur considéré, mais aussi par les calculateurs de moteur des moteurs adjacents au moteur considéré.

Ainsi par exemple, les calculs de moteur réalisé pour le premier moteur M1 sont réalisés non seulement par les calculateurs de moteur du moteur M1, mais aussi par les calculateurs de moteur correspondants du moteur M2 et du moteur M6. Les moteurs M2 et M6 en effet sur la circonférence de la baie multi-moteurs 10 sont les deux moteurs voisins du moteur M1, dont l'indice diffère de 1 par rapport à 1 (modulo 7).

Les calculs de moteur concernant le moteur M1 sont donc réalisés également :
- pour les calculs de moteur concernant l'ensemble du moteur M1 (réalisés par le calculateur 22-1) : sur les calculateurs de moteurs principaux 22-2 et 22-6 ;
- pour les calculs de moteur concernant les actionneurs de vannes (réalisés par le calculateur 24A-1) : sur les calculateurs de moteur secondaire 24A-2 et 24A-6 ; et
- pour les calculs de moteur concernant les fonctions de sécurité et de monitoring (réalisés par le calculateur 24B-1) : sur les calculateurs de moteur secondaire 24B-2 et 24B-6.

Grâce à ces dispositions, lorsque la baie 10 est en fonctionnement, chaque calcul de moteur est réalisé en parallèle sur trois calculateurs de moteurs.

Dans cet exemple, non seulement les calculs relatif au moteur dans son ensemble sont réalisés de manière redondante, mais aussi les calculs relatifs aux équipements de chacun des moteurs.

Dans un deuxième mode de réalisation, seuls les calculs effectués par le calculateur de moteur 22-1, qui concernent le moteur M1 dans son ensemble sont réalisés de manière redondante en utilisant les calculateurs de moteur 22-2 et 22-6 des moteurs M2 et M6.

Dans ce mode de réalisation, en ce qui concerne les calculs de moteur concernant des équipements de moteur, la redondance de calcul est assurée au sein même des calculateurs de moteur. Ainsi dans ce cas, chacun des calculateurs de moteurs 24A-1 et 24B-1 présente une architecture matérielle et logicielle interne redondante.

D'autre part, dans un troisième mode de réalisation, pour chacun des moteurs, les calculs concernant le moteur sont de plus réalisés en parallèle sur un calculateur de moteur de chacun des moteurs. Dans ce cas, le niveau de redondance est extrêmement élevé (chaque calcul sera réalisé 7 fois en parallèle).

Dans un quatrième mode de réalisation, la redondance est organisée seulement au sein des moteurs extérieurs Mi pour i=1 à 6, c'est-à-dire au sein des moteurs disposés sur le pourtour extérieur de la baie 10. (Inversement pour le moteur central M7, on choisit d'utiliser des calculateurs de moteur intrinsèquement redondants).

La règle de redondance choisie pour les moteurs Mi (i=1..6) est de dupliquer un calcul de moteur pour un moteur Mi sur les moteurs Mj tels que l'écart entre i et j soit exactement égal à 2 (modulo 6). Dans ce cas, les calculs de moteur réalisé pour le premier moteur M1 sont réalisés non seulement par les calculateurs de moteur du moteur M1, mais aussi par les calculateurs de moteur du moteur M3 et du moteur M5.

Les moteurs M3 et M5 en effet sur la circonférence de la baie multimoteurs 10 sont les deux moteurs voisins du moteur M1, dont l'indice diffère de 2 par rapport à 1, modulo 6.

Dans un cinquième mode de réalisation, comme dans le quatrième mode de réalisation, la redondance est organisée pour tous les calculateurs des moteurs Mi. Ainsi, lorsque la baie 10 fonctionne normalement, chaque calcul de moteur effectué par un calculateur 22-i, 24A-i ou 24B-i d'un moteur Mi est exécuté simultanément en parallèle sur les six autres calculateurs de même type que le calculateur de moteur considéré (selon le cas 22-j, 24A-j ou 24B-j) des moteurs Mj pour lesquels j est différent de i.

De plus dans ce mode de réalisation, dans la baie 10 le calculateur de moteur 22-7 a un rôle de calculateur central. A ce titre, il constitue un dispositif de détermination qui détermine à chaque pas de temps quel calculateur de moteur est le calculateur opérant, pour le calcul de moteur considéré, pour chacun des moteurs.

Dans ce but, pendant les phases de fonctionnement de la baie 10, à chaque pas de temps t chaque calculateur principal de moteur 22-i des moteurs Mi envoie au calculateur 22-7 un vecteur d'état Vi(t) comprenant trois valeurs : Vi(t) = (vi1(t),vi2(t),vi3(t)). Ces trois valeurs indiquent l'état de fonctionnement respectivement du calculateur principal 22-1, et des deux calculateurs de moteur secondaires 22A-i et 22B-i. Pour chaque moteur Mi, le vecteur Vi(t) ainsi constitué indique si les calculateurs de moteur fonctionnent convenablement ou au contraire si un ou plusieurs d'entre eux subi(ssen)t un dysfonctionnement. A titre d'exemple, la variable vij(t) (j=1,2,3) pour un moteur Mi peut être une variable binaire caractérisant l'état du calculateur considéré : cette variable prend la valeur 1 si le calculateur fonctionne normalement et 0 s'il subit un dysfonctionnement.

A chaque pas de temps t, le calculateur central 22-7 reçoit l'ensemble des vecteurs d'état Vi(t) pour les six moteurs Mi. A partir de cette information, il identifie quels calculateurs de moteur des moteurs Mi subissent (le cas échéant) un dysfonctionnement.

Pour chaque calculateur de moteur des moteurs Mi, si le calculateur de moteur ne subit pas de dysfonctionnement, le calculateur central 22-7 détermine que le calculateur de moteur est un calculateur opérant pour le moteur Mi ; pour les calculs de moteur réalisés par ce calculateur, ce sont alors les résultats de ce calculateur de moteur qui sont utilisés pour l'exploitation du moteur.

Inversement, dès lors qu'un calculateur de moteur (22-i, 24A-i, ou 24B-i selon le cas) subit un dysfonctionnement, le calculateur central 22-7 détermine que ce calculateur de moteur est défaillant, et ne peut donc pas être le calculateur de moteur opérant pour le moteur Mi. Le calculateur central 22-7 détermine le calculateur de moteur opérant en remplacement du calculateur de moteur considéré, en appliquant la règle de sélection suivante : le calculateur de moteur opérant est le calculateur de moteur d'indice immédiatement supérieur (22-i+1, 24A-i+1, ou 24B-i+1 selon le cas, ou encore 22-1, 24A-1, ou 24B-1 selon le cas, au cas où i=7) ; à condition que ce calculateur de moteur ne subisse pas de dysfonctionnement.

D'autres règles peuvent naturellement être adoptées pour déterminer le calculateur de moteur opérant lorsqu'un calculateur de moteur subit un dysfonctionnement.

Quoique la présente invention ait été décrite en se référant à des exemples de réalisation spécifiques, il est évident que des différentes modifications et changements peuvent être effectués à partir de l'exemple donné sans sortir de la portée générale de l'invention telle que définie par les revendications. Par conséquent, la description et les dessins doivent être considérés dans un sens illustratif plutôt que restrictif.

## Revendications

1. Baie multimoteurs (10) comportant une pluralité de moteurs (M1..M7), chacun desdits moteurs comportant un calculateur de moteur (22,24A,24B) associé au moteur et configuré pour acquérir des signaux de mesure provenant de capteurs (32,34) du moteur et pour exécuter un calcul de moteur qui est un calcul visant à obtenir une information relative au moteur ou à au moins un équipement de celui-ci,
la baie étant **caractérisée en ce que** pour au moins un premier moteur, au moins un calculateur de moteur associé à un autre moteur que le premier moteur est configuré pour exécuter ledit calcul de moteur pour le premier moteur en parallèle avec le calculateur associé au premier moteur.

2. Baie multimoteurs (10) selon la revendication 1, configurée de telle sorte que pour chaque moteur, par défaut chaque calculateur de moteur du moteur est un calculateur opérant qui fournit des résultats de calculs de moteur qui sont pris en considération pour le moteur considéré ; et que, lorsqu'une défaillance d'un calculateur de moteur du moteur est détectée, un calculateur de moteur associé à un autre moteur et effectuant en parallèle les calculs de moteur du calculateur défaillant devient un calculateur opérant en remplacement du calculateur défaillant.

3. Baie multimoteurs (10) selon la revendication 2, comportant un calculateur central, et dans laquelle chaque moteur est configuré pour communiquer au calculateur central un vecteur d'état indiquant ou permettant de détecter si le ou les calculateurs de moteur du moteur fonctionnent convenablement ou au contraire subissent un dysfonctionnement ; et pour chacun des moteurs, le calculateur central sélectionne le ou les calculateurs opérants qui fournissent les résultats de calculs de moteur du moteur qui sont pris en considération, en utilisant une fonction de sélection prédéterminée.

4. Baie multimoteurs (10) selon l'une quelconque des revendications 1 à 3, comportant un dispositif de détermination (22-7) configuré pour, lorsque ledit calcul de moteur a été exécuté en parallèle par une pluralité de calculateurs (22,24A,24B), déterminer une valeur unique à prendre en compte comme résultat de ce calcul.

5. Baie multimoteurs (10) selon la revendication 4 dans laquelle, lors de la détermination de ladite unique valeur à prendre en compte, le dispositif de détermination (22-7) identifie un ou des calculateurs de moteur valides parmi ladite pluralité de calculateurs (22,24A,24B), et détermine ladite valeur unique sur la base des informations issues du ou des calculateurs identifié(s) comme valide(s).

6. Baie multimoteurs (10) selon l'une quelconque des revendications 1 à 5, dans laquelle ladite pluralité de moteur comporte au moins deux moteurs.

7. Baie multimoteurs (10) selon l'une quelconque des revendications 1 à 6, dans laquelle pour chacun des moteurs (M1..M7), au moins N calculateurs de moteur tels que chacun desdits N calculateurs de moteur est associé à un autre moteur que le moteur considéré sont configurés pour exécuter ledit calcul de moteur pour le moteur considéré.

8. Baie multimoteurs (10) selon l'une quelconque des revendications 1 à 7, dans laquelle la pluralité de moteurs (M1..M7) comprend un groupe de P moteurs Mi (M1..M6), i variant de 1 à P, P étant inférieur au nombre total de moteurs ; et pour chaque moteur Mi du groupe de moteur, N ou au moins N calculateur(s) de moteur associé(s) à N autre(s) moteur(s) du groupe que le moteur Mi est ou sont configuré(s) pour exécuter ledit calcul de moteur pour le moteur Mi.

9. Baie multimoteurs (10) selon la revendication 8, dans laquelle au sein du groupe (M1..M6), pour chaque moteur Mi, N calculateur(s) de moteur associé(s) à N moteur(s) Mj, j variant de 1 à N, du groupe autre(s) que le moteur Mi, est ou sont configuré(s) pour exécuter ledit calcul de moteur pour le moteur Mi ; et les indices j sont déterminés en fonction de i de telle sorte que l'écart entre i et j est inférieur à une valeur prédéterminée, ou égal à une valeur prédéterminée.

10. Baie multimoteurs (10) selon la revendication 8 ou 9, dans laquelle le groupe de moteurs (M1..M6) est un groupe de moteurs extérieurs (M1... M6) disposés le long d'un pourtour extérieur de la baie, ou un groupe de moteurs centraux entourés par des moteurs extérieurs disposés le long d'un pourtour extérieur de la baie.

11. Baie multimoteurs (10) selon l'une quelconque des revendications 1 à 10, dans laquelle chacun desdits moteurs est un moteur-fusée.

12. Lanceur spatial (100) comprenant au moins une baie multimoteurs (10) selon l'une quelconque des revendications 1 à 11.

## Patentansprüche

1. Mehrmotoriges Gestell (10), das mehrere Motoren (M1...M7) umfasst, wobei jeder der Motoren einen Motorrechner (22, 24A, 24B) umfasst, der dem Motor zugehörig ist und dazu ausgestaltet ist, Messignale, die von Sensoren (32, 34) des Motors stammen, zu erfassen und eine Motorberechnung auszuführen, die eine Berechnung ist, die darauf abzielt, eine Information zu erhalten, die den Motor oder mindestens eine Ausrüstung davon betrifft,
wobei das Gestell **dadurch gekennzeichnet ist, dass** für mindestens einen ersten Motor mindestens ein Motorrechner, der einem anderen Motor als dem ersten Motor zugehörig ist, dazu ausgestaltet ist, die Motorberechnung für den ersten Motor parallel mit dem Rechner auszuführen, der dem ersten Motor zugehörig ist.

2. Mehrmotoriges Gestell (10) nach Anspruch 1, das derart ausgestaltet ist, dass für jeden Motor standardmäßig jeder Motorrechner des Motors ein betriebener Rechner ist, der Motorberechnungsergebnisse liefert, die für den berücksichtigten Motor berücksichtigt werden, und derart dass, wenn eine Störung eines Motorrechners des Motors festgestellt wird, ein Motorrechner, der einem anderen Motor zugehörig ist und die Motorberechnungen des gestörten Rechners parallel durchführt, ein betriebener Rechner als Ersatz für den gestörten Rechner wird.

3. Mehrmotoriges Gestell (10) nach Anspruch 2, das einen Zentralrechner umfasst und wobei jeder Motor dazu ausgestaltet ist, dem Zentralrechner einen Zustandsvektor mitzuteilen, der angibt oder ermöglicht festzustellen, ob der oder die Motorrechner des Motors in geeigneter Weise funktionieren oder im Gegenteil von einer Fehlfunktion betroffen sind, und der Zentralrechner für jeden der Motoren den oder die betriebenen Rechner, welche die Motorberechnungsergebnisse des Motors liefern, die berücksichtigt werden, unter Verwendung einer vorbestimmten Auswahlfunktion auswählt.

4. Mehrmotoriges Gestell (10) nach einem der Ansprüche 1 bis 3, das eine Bestimmungsvorrichtung (22-7) umfasst, die dazu ausgestaltet ist, wenn die Motorberechnung parallel durch mehrere Rechner (22, 24A, 24B) ausgeführt wurde, einen einzigen Wert zu bestimmen, der als Ergebnis dieser Berechnung zu berücksichtigen ist.

5. Mehrmotoriges Gestell (10) nach Anspruch 4, wobei bei der Bestimmung des einzigen zu berücksichtigenden Werts die Bestimmungsvorrichtung (22-7) einen oder mehrere gültige Motorrechner unter den mehreren Rechnern (22, 24A, 24B) identifiziert und den einzigen Wert basierend auf Informationen bestimmt, die von dem bzw. den als gültig identifizierten Rechner bzw. Rechnern stammen.

6. Mehrmotoriges Gestell (10) nach einem der Ansprüche 1 bis 5, wobei die mehreren Motoren mindestens zwei Motoren umfassen.

7. Mehrmotoriges Gestell (10) nach einem der Ansprüche 1 bis 6, wobei für jeden der Motoren (M1...M7) mindestens N Motorrechner, derart dass jeder der N Motorrechner einem anderen Motor als dem berücksichtigten Motor zugehörig ist, dazu ausgestaltet sind, die Motorberechnung für den berücksichtigten Motor auszuführen.

8. Mehrmotoriges Gestell (10) nach einem der Ansprüche 1 bis 7, wobei die mehreren Motoren (M1...M7) eine Gruppe P von Motoren Mi (M1...M6) umfassen, wobei i von 1 bis P variiert, P kleiner als die Gesamtanzahl von Motoren ist, und, für jeden Motor Mi von der Motorgruppe, N oder mindestens N Motorrechner, der bzw. die N anderen Motoren der Gruppe als der Motor Mi zugehörig ist bzw. sind, dazu ausgestaltet ist bzw. sind, die Motorberechnung für den Motor Mi auszuführen.

9. Mehrmotoriges Gestell (10) nach Anspruch 8, wobei in der Gruppe (M1...M6), für jeden Motor Mi, N Motorrechner, der bzw. die N Motoren Mj, wobei j von 1 bis N variiert, der Gruppe, der bzw. die sich von dem Motor Mi unterscheidet bzw. unterscheiden, zugehörig ist bzw. sind, dazu ausgestaltet ist bzw. sind, die Motorberechnung für den Motor Mi auszuführen, und die Indizes j derart in Abhängigkeit von i bestimmt werden, dass der Abstand zwischen i und j kleiner als ein vorbestimmter Wert ist oder gleich einem vorbestimmten Wert ist.

10. Mehrmotoriges Gestell (10) nach Anspruch 8 oder 9, wobei die Motorgruppe (M1...M6) eine Gruppe äußerer Motoren (M1...M6), die entlang eines äußeren Umkreises des Gestells angeordnet sind, oder eine Gruppe mittiger Motoren ist, die von äußeren Motoren umgeben sind, die entlang eines äußeren Umkreises des Gestells angeordnet sind.

11. Mehrmotoriges Gestell (10) nach einem der Ansprüche 1 bis 10, wobei jeder der Motoren ein Raketentriebwerk ist.

12. Trägerrakete (100), die mindestens ein mehrmotoriges Gestell (10) nach einem der Ansprüche 1 bis 11 umfasst.

## Claims

1. A multi-engine bay (10) including a plurality of engines (M1..M7), each of said engines including an engine computer (22, 24A, 24B) associated with the engine and configured to acquire measurement signals coming from sensors (32, 34) of the engine and to execute an engine computation which is a computation aimed at obtaining information relating to the engine or to at least one piece of equipment thereof,
the bay being **characterized in that**, for at least a first engine, at least one engine computer associated with an engine other than the first engine is configured to execute said engine computation for the first engine in parallel with the computer associated with the first engine.

2. The multi-engine bay (10) according to claim 1, configured such that for each engine, by default each engine computer of the engine is an operating computer that provides engine computation results which are taken into consideration for the considered engine; and that, when a failure of an engine computer of the engine is detected, an engine computer associated with another engine and performing in parallel the engine computations of the faulty computer becomes an operating computer in replacement of the faulty computer.

3. The multi-engine bay (10) according to claim 2, including a central computer, and wherein each engine is configured to communicate to the central computer a state vector indicating or making it possible to detect whether the engine computer(s) of the engine are operating properly or on the contrary are experiencing a malfunction; and for each of the engines, the central computer selects the operating computer(s) that provide the engine computation results of the engine which are taken into consideration, by using a predetermined selection function.

4. The multi-engine bay (10) according to any one of claims 1 to 3, including a determination device (22-7) configured to determine, when said engine computation has been executed in parallel by a plurality of computers (22, 24A, 24B), a unique value to be taken into account as a result of this computation.

5. The multi-engine bay (10) according to claim 4 wherein, when determining said single value to be taken into account, the determination device (22-7) identifies one or several valid engine computers among said plurality of computers (22, 24A, 24B), and determines said single value based on the information derived from the computer(s) identified as valid.

6. The multi-engine bay (10) according to any one of claims 1 to 5, wherein said engine plurality includes at least two engines.

7. The multi-engine bay (10) according to any one of claims 1 to 6, wherein for each of the engines (M1..M7), at least N engine computers such that each of said N engine computers is associated with an engine other than the considered engine, are configured to execute said engine computation for the considered engine.

8. The multi-engine bay (10) according to any one of claims 1 to 7, wherein the plurality of engines (M1..M7) comprises a group of P engines Mi (M1..M6), i varying from 1 to P, P being smaller than the total number of engines; and for each engine Mi of the engine group, N or at least N engine computer(s) associated with N engine(s) of the group other than the engine Mi is/are configured to execute said engine computation for the engine Mi.

9. The multi-engine bay (10) according to claim 8, wherein within the group (M1..M6), for each engine Mi, N engine computer(s) associated with N engine(s) Mj, j varying from 1 to N, of the group other than the engine Mi, is/are configured to execute said engine computation for the engine Mi; and the indices j are determined as a function of i such that the deviation between i and j is smaller than a predetermined value, or equal to a predetermined value.

10. The multi-engine bay (10) according to claim 8 or 9, wherein the group of engines (M1..M6) is a group of outboard engines (M1..M6) disposed along an outer periphery of the bay, or a group of central engines surrounded by outboard engines disposed along an outer periphery of the bay.

11. The multi-engine bay (10) according to any one of claims 1 to 10, wherein each of said engines is a rocket engine.

12. A space launcher (100) comprising at least one multi-engine bay (10) according to any one of claims 1 to 11.
